# EUROPEAN PATENT APPLICATION

(11) **EP 4 023 703 A1**
(43) Date of publication of application: **06.07.2022**
(21) Application number: 20306705.3
(22) Date of filing: 29.12.2020
(51) Int. Cl.: C08K 3/013, C08L 71/00, B29C 64/153

(54) **COMPOSITE ARTICLE MADE OF COMPOSITION(S) BASED ON PAEK(S)**

(71) Applicant: ARKEMA FRANCE, 92700 Colombes (FR)
(72) Inventor: REBER III, Roderick, KING OF PRUSSIA, PA 19406-0936 (US); BARSOTTI, Robert, KING OF PRUSSIA, PA 19406-0936 (US)
(74) Representative: Arkema Patent

(57) **Abstract**

The invention concerns a composite article, such as a mold part or an extrusion die, made of a composition comprising at least one polyarylether ketone and at least one thermally conductive filler, wherein the composite article has a thermal conductivity of at least 0.5 W/mK. The invention also concerns a composition and uses thereof.

## Description

### TECHNICAL FIELD

The present invention relates to a composite article, such as a mold part, made of a composition based on PAEK(s). The composite article may advantageously be obtained by techniques of rapid tooling.

### TECHNICAL BACKGROUND

Today, most of injection and thermoforming molds are still produced using conventional building technologies, such as milling or electric discharge machining, and are made of metal (e.g. aluminum or steel) or hardwood. The tools thus produced are very robust, but are only cost-effective in mass production. For smaller production batches, the costs of a conventional tool for plastic processing may be prohibitive, which often makes additive manufacturing a more appealing option. Although additive manufacturing techniques such as powder bed fusion or fused filament fabrication (FFF) may be slower or more expensive on an individual part basis, there may be many cases where the lack of an upfront tooling cost makes additive manufacturing more appealing than conventional processes. However, directly producing parts by additive manufacturing is not without its own set of limitations. Firstly, the materials available for polymeric additive manufacturing are limited. Only a narrow subset of all polymeric materials are suitable for either powder bed fusion or FFF. For example, FFF is especially difficult with semicrystalline or soft, rubbery materials, and powder bed fusion is limited to a very specific selection of semicrystalline powders that must be finely tuned for the printer and print settings. Secondly, polymeric additive manufacturing techniques are not ideal for all part geometries. Large parts with flat sections are often either difficult to build with acceptable dimensional tolerances or cost prohibitive for serial production. For the cases where production run sizes make conventional tooling prohibitive, but part design or material requirements make additive manufacturing difficult or uneconomical, a method where the manufacturing tooling is made by additive manufacturing, but the end use parts are made by conventional means such as injection molding or thermoforming may be desirable.

New techniques referred as "rapid tooling" techniques have developed to produce tools in a quick and cost-effective way. These techniques are usually based on additive manufacturing techniques. For plastic processing, the most widely discussed rapid tooling technique is metal laser sintering. Metal laser sintering has the capability to produce robust molds with material properties well suited for tooling applications, but the sintering process often results in a rough surface unsuitable for use directly. The metal articles then require extensive machining or surface finishing to produce a suitable surface for use, often using the same techniques the rapid-tooling process sought to eliminate.

The tools produced for the rapid-tooling process are often used in a subsequent manufacturing process to produce relatively small numbers of finished goods when compared to conventionally produced tools. These tools do not require the same level of mechanical robustness as their conventionally produced alternatives, but do need to withstand the processing conditions of the subsequent material to be processed. For example, a mold made by rapid tooling should be able to withstand the temperature and pressure used to form final objects out of the desired polymer, in many cases 250°C or hotter for many engineering thermoplastics, but may only be used to produce several hundred parts. For comparison, a conventional injection mold might have an expected useful life of several hundred thousand or even millions of parts.

Rapid tooling techniques enables to reduce the time and cost for mold-forming process, offers new options in the geometries which can be manufactured and does not require high volumes of production. It also allows, due to its flexibility in tool design, the ease of product customization and the ability to adapt to customers' specifications. Conceptual designs can be further improved without incurring high costs compared to conventional manufacturing processes.

Polyaryl ether ketones are well-known high-performance technical polymers. They may be used for applications which are restrictive in terms of temperature and/or in terms of mechanical constraints, or even chemical constraints. Compositions of polyaryl ether ketone(s) (PAEK(s)), such as poly-ether-ether-ketone (PEEK) or poly-ether-ketone-ketone (PEKK), have been widely used for additive manufacturing to produce functional parts as prototypes or for serial production. However, their use for rapid tooling has been quite limited until now. A tool or mold made from a PAEK based material could be especially useful for rapid-tooling because of the robust mechanical properties and relatively high use temperature. The present invention aims at providing a composite article made of a composition based on PAEK(s) with improved properties. The aim of the invention is notably to provide a composite article, such as a mold part, which has good thermal resistance, good mechanical properties, good wear properties, and/or good heat dissipation properties.

The present invention also aims at providing compositions based on PAEK(s) and their use in rapid tooling techniques to manufacture the composite article thereof.

### SUMMARY

The invention concerns a composite article, such as a mold part or an extrusion die, made of a composition comprising at least one polyarylether ketone and at least one thermally conductive filler, wherein the composite article has a thermal conductivity measured according to the Guarded Heat Flow Meter Technique as described in ASTM E1530-19 at 25°C of at least 0.5 W/mK, preferably of at least 0.75 W/mK, more preferably of at least 1 W/mK, even more preferably of at least 2,5 W/mK, very preferably of at least 5 W/mK.

According to some embodiments, the thermally conductive filler may be chosen among the list consisting of:
- ceramics, such as boron nitride or aluminum oxide,
- metals, such as copper, stainless steel, aluminum, gold, silver,
- carbon-based additives, such as carbon black, carbon nanotubes, graphite
- mineral additives, such as hematite,
- their mixture.

According to some embodiments, the at least one thermally conductive filler may have a particle size distribution as measured by laser diffraction according to ISO 13320:2009, having a median diameter D50 of 0,4 µm to 80 µm, preferably of 0,5 µm to 50 µm.

According to some embodiments, the composition may consist of: said polyaryletherketone(s), said thermally conductive filler(s), optionally one or more additional thermoplastics, different from said polyaryletherketone(s), optionally one or more additional fillers, different from said thermally conductive filler(s), and optionally one or more additives.

According to some embodiments, the composition may comprise reinforcing fibers, and preferably carbon fibers.

According to some embodiments, the reinforcing fibers may be sensibly unidirectionnally oriented.

According to some embodiments, the composition may comprise boron nitride and carbon fibers.

According to some embodiments, the poly-aryl-ether-ketone may be a poly-ether-ketone-ketone.

According to some embodiments, the poly-ether-ketone-ketone may be a copolymer which consists essentially of, preferably consists of, two monomeric units having the formula: 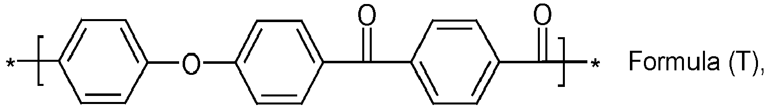 and 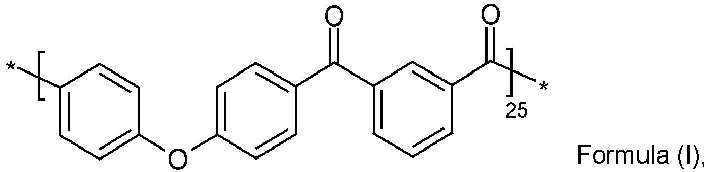 wherein the copolymer has a T:I ratio from 55:45 to 85:15;
preferably, wherein the copolymer has a T:I ratio from 58:42 to 72:28;
and even more preferably, wherein the copolymer has a T:I ratio of 60:40. The copolymer is advantageously a random copolymer.

According to some embodiments, the mass ratio of thermally conductive filler(s) to polyaryletherketone(s) may be from 1:20 to 4:1 more preferably 1:5 to 2:1 most preferably form 1:3 to 1:1.

According to some embodiments, the composite article of the invention may be obtained by an additive manufacturing process, preferably by material extrusion additive manufacturing or by electromagnetic radiation-generated sintering additive manufacturing, and more preferably by laser sintering, of said composition.

According to some embodiments, the composite article may have a compressive modulus of at least 3.8 GPa according to ASTM D695 - 15.

According to some embodiments, the composite article may be a mold part for injection molding, or compression molding, or pressure forming, or vacuum forming, or stamp molding, or a die.

The invention also concerns the composition as such used to make the composite article.

The invention finally concerns the use of the composition in a rapid tooling method, wherein the rapid tooling method preferably includes material extrusion additive manufacturing or electromagnetic radiation-generated sintering additive manufacturing, and more preferably laser sintering.

### DESCRIPTION OF EMBODIMENTS

The invention will now be described in more detail without limitation in the following description.

The abbreviation "PAEK" corresponds to the term "polyaryl ether ketone", "PAEKs" corresponds to the term "polyaryl ether ketones" and "PAEK(s)" corresponds to the term "polyaryl ether ketone(s)".

The singular forms "a(n)" or, respectively, "the", mean by default: "at least one" and, respectively "said at least one", unless otherwise mentioned.

In all the ranges set out in the present patent application, the limits are included, unless otherwise mentioned.

The thermal conductivity of a solid material is the time rate of heat flow, under steady conditions, through unit area, per unit temperature gradient in the direction perpendicular to the area. It can be measured according to the Guarded Heat Flow Meter Technique as described in ASTM E1530-19 at 25°C. It is expressed in Watt per meter per Kelvin (W/m.K).

The composite article according to the invention has a thermal conductivity measured according to the Guarded Heat Flow Meter Technique as described in ASTM E1530-19 at 25°C of at least 0.5 W/m.K.

Thermoplastics, such as PAEKs, are known to have a low thermal conductivity of around 0.25 W/m.K. The enhanced thermal conductivity of the composite article thus enables to improve heat dissipation and is notably adapted for a composite article being a mold part in order to reduce the molding cycle time.

In the embodiments in which the thermal conductivity is not substantially isotropic, it is meant by thermal conductivity, the thermal conductivity along the direction through which a thermal exchange is expected. For molds, this generally corresponds to the thermal conductivity along the wall thickness, from a surface forming at least partly a mold cavity to cooling channels.

The composite article according to the invention has preferably a thermal conductivity at 25°C of at least 0.6 W/m.K, or at least 0.65 W/m.K, or at least 0.70 W/m.K, or at least 0.75, or at least 0.80 W/m.K, or at least 0.85 W/m.K, or at least 0.90 W/m.K, or at least 0.95 W/m.K, or at least 1.0 W/m.K, or at least 1.5 W/m.K, or at least 2.0 W/m.K, or at least 2.5 W/m.K, or at least 3.0 W/m.K, or at least 3.5 W/m.K, or at least 4.0 W/m.K, or at least 4.5 W/m.K, or at least 5.0 W/m.K.

The composite article according to the invention may also have a compressive modulus of at least 3.8 GPa according to ASTM D695 - 15.

The composition from which is made the composite article is based on polyaryl ether ketone(s) (PAEK(s)). The composition also comprises a thermally conductive filler to enhance its thermal conductivity.

The composition may also comprise one or more additional thermoplastics, different from said polyaryletherketone(s), and/or one or more additional fillers, different from said thermally conductive filler(s), and/or one or more additives.

The composition may consist of: polyaryl ether ketone(s), thermally conductive filler(s), optionally additional thermoplastic(s), optionally additional filer(s) and optionally additive(s)

### Polyaryl ether ketones

A polyaryl ether ketone (PAEK) includes repeating units having the following formulae:

(-Ar-X-) and (-Ar₁-Y-),

in which:
- Ar and Ar₁ each denote a divalent aromatic radical;
- Ar and Ar₁ may preferably be chosen from 1,3-phenylene, 1,4-phenylene, 1,1'-biphenylene divalent in positions 3,3', 1,1'-biphenyl divalent in positions 3,4', 1,4-naphthylene, 1,5-naphthylene and 2,6-naphthylene;
- X denotes an electron-withdrawing group; it may preferably be chosen from the carbonyl group and the sulfonyl group;
- Y denotes a group chosen from an oxygen atom, a sulfur atom or an alkylene group, such as -(CH₂)- and isopropylidene.

In these units X and Y, at least 50%, preferably at least 70% and more particularly at least 80% of the groups X are a carbonyl group, and at least 50%, preferably at least 70% and more particularly at least 80% of the groups Y represent an oxygen atom.

According to a preferred embodiment, 100% of the groups X may represent a carbonyl group and 100% of the groups Y may represent an oxygen atom. Advantageously, the PAEK(s) may be chosen from:
- a polyether ketone ketone, also known as PEKK; a PEKK comprises one or more repeat units of formula: -Ph-O-Ph-C(O)-Ph-C(O)-;
- a polyether ether ketone, also known as PEEK; a PEEK comprises one or more repeat units of formula: -Ph-O-Ph-O-Ph-C(O)-;
- a polyether ketone, also known as PEK; a PEK comprises one or more repeat units of formula: -Ph-O-Ph-C(O)-;
- a polyether ether ketone ketone, also known as PEEKK; a PEEKK comprises one or more repeat units of formula: -Ph-O-Ph-O-Ph-C(O)- Ph-C(O)-;
- a polyether ether ether ketone, also known as PEEEK; a PEEEK comprises one or more repeat units of formula: -Ph-O-Ph-O-Ph-O- Ph-C(O)-;
- a polyether diphenyl ether ketone, also known as PEDEK; a PEDEK comprises one or more repeat units of formula: -Ph-O-Ph-Ph-O-Ph-C(O)-;
- and mixtures thereof; and
- copolymers comprising at least two of the abovementioned repeat units,
in which: Ph represents a phenylene group and -C(O)- represents a carbonyl group, each of the phenylenes possibly being, independently, of the ortho (1-2), meta (1-3) or para-(1-4) type, preferentially being of meta or para type.

In addition, defects, end groups and/or monomers may be incorporated in very small amount into the polymers as described in the above list, without, however, having an incidence on their performance.

In the embodiments in which the polymer is a copolymer, it may advantageously be a copolymer of statistical type.

In particular embodiments, the PAEK may be a PEKK essentially consisting of, or consisting of, a terephthalic repeating unit and an isophthalic repeating unit, the terephthalic repeating unit having the formula: 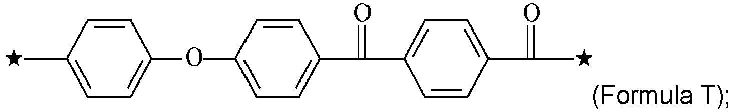 the isophthalic repeating unit having the formula:

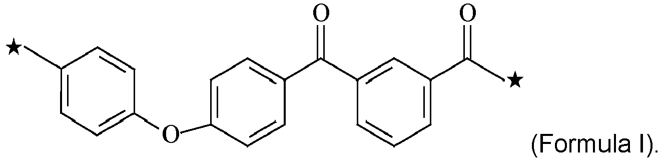

For a polymer of a given family, the term "essentially consisting of repeating unit(s)" means that the repeating unit(s) represent a molar proportion of from 95% to 99.9% in the polymer. In addition, the term "consisting of repeating unit(s)" means that the repeating unit(s) represent a molar proportion of at least 99.9%, ideally of 100%, in the polymer.

The choice of the molar proportion of T units, relative to the sum of the T and I units, is one of the factors which makes it possible to adjust the rate of crystallization of the polyether ketone ketones.

A given molar proportion of T units, relative to the sum of the T and I units, may be obtained by adjusting the respective concentrations of the reagents during the polymerization, in a manner known per se.

The molar proportion of T units relative to the sum of the T and I units of PEKK may notably range from: 0 to 5%; or from 5% to 10%; or from 10% to 15%; or from 15% to 20%; or from 20% to 25%; or from 25% to 30%; or from 30% to 35%; or from 35% to 40%; or from 40% to 45%; or from 45% to 48%; or from 48% to 51%; or from 51% to 54%; or from 54% to 58%; or from 58% to 60%; or from 60% to 62%, or from 62% to 64%; or from 64% to 68%; or from 68% to 72%; or from 72% to 75%; or from 75% to 80%; or from 80% to 85%.

In particular embodiments, the polyether ketone ketone may consist essentially of, or consist of "T" and "I" units, with a molar proportion of T units relative to the sum of the T and I units ranging from : 55% to 85%. The molar proportion of T units relative to the sum of the T and I units may preferably be greater than or equal to 58% and/or less than or equal to 72%.

In particular embodiments, the PAEK may be a polymer consisting essentially of, or even consisting of:
a repeat unit of formula: 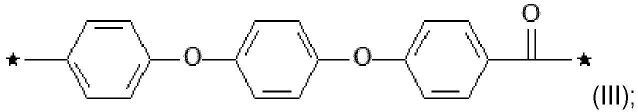 and a repeat unit:

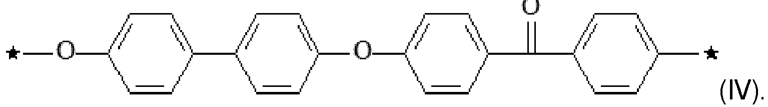

The molar proportion of units (III) relative to the sum of the units (III) and (IV) may range from 0% to 99%. The molar proportion of units (III) relative to the sum of the units (III) and (IV) may preferentially be greater than or equal to 55% and/or less than or equal to 95%, and even more preferentially greater than or equal to 60% and/or less than or equal 85%.

In particular embodiments, the PAEK may be a polymer consisting essentially of, or consisting of:
a repeating unit of formula: 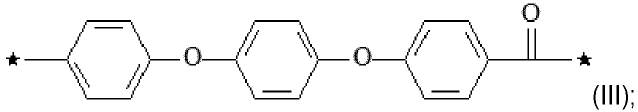 and a repeating unit of formula:

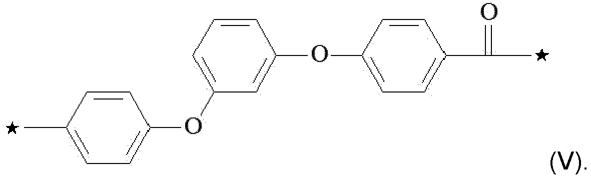

The molar proportion of units (III) relative to the sum of the units (III) and (V) may range from 0% to 99%. The molar proportion of units (III) relative to the sum of the units (III) and (V) may preferentially be greater than or equal to 5% and/or less than or equal to 97%, more preferentially greater than or equal to 40% and/or less than or equal to 96% and even more preferentially greater than or equal to 70% and/or less than or equal 95%.

### Thermally conductive filler:

A thermally conductive filler is a filler which, in the composition, has the ability to substantially increase the thermal conductivity of the PAEK(s).

The thermally conductive filler may be chosen among:
- ceramics, such as boron nitride or aluminum oxide,
- metals, such as copper, stainless steel, aluminum, gold, silver,
- carbon-based, carbon black, carbon nanotubes, or graphite,
- mineral additives, such as hematite,
- their mixture.

The thermal conductive filler may be under the form of particles, platelets, flakes, nanotubes or nanosheets.

The different forms may be defined by different aspect ratios, which are the ratios of a longer dimension to a shorter dimension, often chosen in an orthogonal direction.

Particles may be more or less spherical. They may have an aspect ratio of 1:1 to about 4:1.

Platelets are particles with two dimensions largely similar, with an aspect ratio of 1:1 to about 4:1, and a third dimension substantially smaller less than 10% of the maximum dimension.

A nanotube is a nanometer-scale hollow tube-like structure. The nanotubes may be single-walled or multi-walled. A nanotube should have an aspect ratio greater than 1000:1 when comparing the length to the overall diameter.

A nanosheet is a two-dimensional nanostructure with thickness in a scale ranging from 1 to 100 nm. A typical example of nanosheet is graphene.

In particular, metal thermally conductive fillers may be under the form of flakes, or particles.

Boron nitride exists in various crystalline forms. Among the different crystalline forms the hexagonal one, also called "graphite-like" is particularly preferred. Boron nitride may be under the form of nanotubes, nanosheets or particles. Most commonly, boron nitride as a thermally conductive filler for polymeric materials is available as platelets or spray dried agglomerates of platelets in a range of particle sizes. Commercially available grades most suitable for this invention are platelets with a median particle size of about 2-20 microns such as 3M^{™} CFP 0075 or agglomerates platelets with a median particle size of about 50 microns such as 3M^{™} CFA 50M.

Aluminum oxide and hematite may be under the form of particles. These particles are typically produced by the pulverization of mineral like materials.

Metallic powders such as copper powder may be mainly spherical, produced by any of the commonly used techniques such as atomization, electrolysis, hydrometallurgy or solid state reduction.

The thermally conductive filler(s), notably when under particle form, may have a size distribution as measured by laser diffraction according to ISO 13320:2009, having a median diameter D50 of 0,4 µm to 80 µm, preferably of 0,5 µm to 50 µm.

### Additional thermoplastics

The composition from which is made the composite article may comprise one or more additional thermoplastics, different from the polyaryletherketone(s).

The other thermoplastic(s) may be chosen from the list consisting of: a fluorinated ethylene-propylene copolymer (FEP), a perfluoroalkoxy-alkane copolymer (PFA), a perfluorinated elastomer (FFKM), a polyetherimide (PEI), a polyetherimide block copolymer / polydimethylsiloxane (PEI / PDMS), a poly (ether sulfone) (PES), a polysulfone (PSU), a polyphenylene sulfone (PPSU), a poly (phenylene sulfide), a polyphenylene ether (PPE) and their mixture.

### Other fillers and/or additives:

Among the other fillers, we can cite non-fibrous fillers, such as titanium dioxide, talc, or calcium carbonate.

Among the other fillers, we can also cite reinforcing fibers, crushed or not, such as glass fibers and carbon fibers. Generally speaking, reinforcing fiber have an aspect ratio length to diameter of at least 25:1 A suitable commercial grade of reinforcing carbon fibers for this application are Teijin Tenax^{®}-A HT M100 milled carbon fibers without any adhesion promoting coating.

Among the additives, we can mention stabilizing agents (heat stabilizer such as for example phosphate salts, etc.), optical brighteners, dyes, pigments, energy-absorbing additives (including UV absorbers), viscosity additives, additives to adjust the rate of crystallization of the composition.

### Composition comprising PAEK(s) and thermally conductive filler(s)

In certain embodiments, the PAEK(s) and thermally conductive filler(s) may represent at least 50%, or at least 55%, or at least 60%, or at least 65%, or at least 70%, or at least 75%, or at least 80%, or at least 85%, or at least 90%, or at least 95%, or at least 96%, or at least 97%, or at least 98%, or at least 99%, or at least 100% by weight of the total weight of composition.

The other thermoplastic(s), if present, may represent less than 40% by weight of polymers in the composition.

The other filler(s) such as the reinforcing fillers, if present, may represent less than 50% by weight of the composition. Preferably, the other fillers may represent less than 35% by weight of the composition. In some embodiments, the other fillers may represent less than 25%, or less than 20%, or less than 15%, or less than 10% of the weight of the composition.

The additive(s), if present, may represent less than 10%, preferably less than 5%, and more preferably less than 1% by weight of the total weight of the composition.

In certain embodiments, the composition may consist essentially of, or may consist of, the mixture of PAEK(s) and thermally conductive filler(s).

In certain embodiments, the mass ratio of thermally conductive filler(s) to polyaryletherketone(s) is from 1:20 to 4:1. Preferably, the mass ratio of the thermally conductive filler(s) to polyaryletherketone(s) is from filler 1:5 to 2:1. More preferably, it is from 1:3 to 1:1.

In certain embodiments, the composition may comprise only one type of PAEK having a given chemical composition, for example only PEKK polymer consisting of terephthalic and isophthalic repeat units having a T:I mole ratio of 60:40, and no other type of PAEK. Alternatively, the PAEK-based composition may comprise only one type of PAEK, but with different chemical compositions, for example a mixture of PEKK having a T:I mole ratio of 60:40 and a PEKK having a T:I mole ratio of 50:50 or else a mixture of PEKK having a T:I mole ratio of 60:40 and a PEKK having a T:I mole ratio of 55:45.

In certain embodiments, the composition may comprise at least two different types of PAEKs. For example, the composition may be a mixture of one PEKK and of one polymer consisting essentially of, or consisting of, units (III) and (IV). For example, the composition may also be a mixture of one PEKK and of one polymer consisting essentially of, or consisting of, units (III) and (V).

In certain embodiments, the composition may consist of the PAEK(s) and the thermally conductive filler(s).

In some embodiments the thermally conductive filler(s) may comprise a blend of different sizes and aspect ratios in order to create a more connected network of thermally conductive filler(s).

In certain embodiments, the composition may comprise one thermally conductive filler and one reinforcing agent. The thermally conductive filler has a substantial contribution to the thermal conductivity in the composite article and may also have a contribution to some extent to its mechanical properties. The reinforcing agent has a substantial contribution to the mechanical properties and may also have a contribution to the thermal conductivity, but to a lesser extent.

The composition may notably comprise carbon fibers as a reinforcing agent. The composition may notably comprise carbon graphite, boron nitride or hematite as a conductive filler.

In certain embodiments, the composition may comprise, or consist of, the PAEK(s), the thermally conductive filler(s), and the reinforcing agent(s).

In some embodiments, the composition may comprise 5% to 15% of carbon fibers, 20% to 50% of boron nitride, and up to 75% of PAEK(s), by weight of the total composition. The composition may notably consist of 5% to 15% of carbon fibers, 20% to 50% of boron nitride, and the rest of PAEK(s).

In some embodiments, the composition may comprise 15% to 25% of carbon fibers, 15% to 45% of boron nitride, and up to 70% of PAEK(s), by weight of the total composition. The composition may notably consist of 15% to 25% of carbon fibers, 15% to 45% of boron nitride, and the rest of PAEK(s).

In some embodiments, the composition may comprise 25% to 35% of carbon fibers, 10% to 40% of boron nitride, and up to 65% of PAEK(s), by weight of the total composition. The composition may notably consist of 25% to 35% of carbon fibers, 10% to 40% of boron nitride, and the rest of PAEK(s).

In some embodiments, the composition may comprise 5% to 15% of carbon fibers, 20% to 50% of graphite, and up to 75% of PAEK(s), by weight of the total composition. The composition may notably consist of 5% to 15% of carbon fibers, 20% to 50% of graphite, and the rest of PAEK(s).

In some embodiments, the composition may comprise 15% to 25% of carbon fibers, 15% to 45% of graphite, and up to 70% of PAEK(s), by weight of the total composition. The composition may notably consist of 15% to 25% of carbon fibers, 15% to 45% of graphite, and the rest of PAEK(s).

In some embodiments, the composition may comprise 25% to 35% of carbon fibers, 10% to 40% of graphite, and up to 65% of PAEK(s), by weight of the total composition. The composition may notably consist of 25% to 35% of carbon fibers, 10% to 40% of graphite, and the rest of PAEK(s).

In some embodiments, the composition may comprise 5% to 15% of carbon fibers, 20% to 50% of hematite, and up to 75% of PAEK(s), by weight of the total composition. The composition may notably consist of 5% to 15% of carbon fibers, 20% to 50% of hematite, and the rest of PAEK(s).

In some embodiments, the composition may comprise 15% to 25% of carbon fibers, 15% to 45% of hematite, and up to 70% of PAEK(s), by weight of the total composition. The composition may notably consist of 15% to 25% of carbon fibers, 15% to 45% of hematite, and the rest of PAEK(s).

In some embodiments, the composition may comprise 25% to 35% of carbon fibers, 10% to 40% of hematite, and up to 65% of PAEK(s), by weight of the total composition. The composition may notably consist of 25% to 35% of carbon fibers, 10% to 40% of hematite, and the rest of PAEK(s).

### Process of manufacturing

The composition described hereinabove can be used in different object manufacturing technologies such as: laser sintering, fused deposition modeling, molding, injection molding, extrusion, thermoforming, rotational molding, compression molding, compounding, impregnation, or wire coating.

The composition is particularly adapted to be used in rapid tooling techniques. Preferably, the rapid tooling technique may include material extrusion additive manufacturing or electromagnetic radiation-generated sintering additive manufacturing. More preferably, and as detailed herein below, the composition may be used in electromagnetic radiation-generated sintering additive manufacturing, notably in laser sintering.

Indeed, the design of the mold and surface finish is usually of a lower quality with extrusion additive manufacturing, such as fused deposition modeling, than with electromagnetic radiation-generated sintering, such as laser sintering. Extrusion additive manufacturing does not usually enable to produce fine details and usually tend to leave a rough surface with each deposited layer. Therefore, articles, such as mold parts or dies, would require extensive machining after printing before they can be used. Extrusion additive manufacturing is also usually slower, and there can be no cycle time saved in producing multiple pieces simultaneously.

The composition to be used in an electromagnetic radiation-generated sintering additive manufacturing is generally under a pulverulent form.

The pulverulent composition may be obtained by a method including milling polymer flakes or extruded granules according to techniques known to those skilled in the art.

The milling of polymer flakes or of extruded granules may be performed at a temperature below -20°C, preferentially at a temperature below -40°C, by cooling with liquid nitrogen, or liquid carbon dioxide, or cardice, or liquid helium. In other embodiments, notably in the case of polymer flakes, the milling may be performed at room temperature, i.e. at a temperature that may notably be from 15°C to 35°C, for example 25°C.

The thermally conductive filler(s), other filler(s) if present, certain polymer(s) other than PAEK(s) if present, and/or certain additive(s) if present may be incorporated into the composition, for example through melt extrusion by compounding and then milling granules, in order to obtain a PAEK-based powder. The PAEK-based powder may be the pulverulent composition itself if not blended with other material as further explained below. Materials which have been incorporated tend to be randomly oriented leading to articles with isotropic properties.

The thermally conductive filler(s), other filler(s) if present, certain polymer(s) other than PAEK(s) if present, and/or certain additive(s) if present, may be dry-blended with a PAEK or a PAEK-based powder, in order to form the pulverulent composition. Non-spherical materials which have been dry blended with a PAEK or PAEK-based powder tends to be oriented in the plane parallel to the powder re-coater motion, leading to anisotropic properties. Such anisotropic properties may be of importance to design an article with greater thermal conductivity and/or stiffness in one direction over the other. This anisotropy can be beneficial if the part is constructed in the powder bed such that the useful properties are maximized for the mold being created.

In some embodiments, the composition may comprise a thermally conductive filler and reinforcing fibers, wherein the thermally conductive filler and the reinforcing fibers have both been dry-blended with a PAEK or PAEK-based powder.

In some embodiments, the composition may comprise a thermally conductive filler and reinforcing fibers, wherein the thermally conductive filler and the reinforcing fibers have both been incorporated into PAEK to form a PAEK-based powder.

In some embodiments, the composition comprises a thermally conductive filler which is incorporated into PAEK to form a PAEK-based powder whereas the reinforcing fibers are dry blended with the PAEK-based powder.

In some embodiments, the composition may have a particle size distribution, as measured by laser diffraction according to ISO 13320:2009, such that the median diameter d50 of the distribution is such that: d50 < 100 µm. Preferably, the particle size distribution may be such that: 40 µm < d50 < 80 µm. More preferably, the particle size distribution may be such that: d10 > 15 µm, 40 µm < d50 < 80 µm, and d90 < 240 µm. In certain embodiments, d90 < 220 µm or d90 < 200 µm. These particle size distributions are particularly advantageous for powders / pulverulent compositions intended to be used in a sintering process.

In embodiments wherein the thermally conductive filler is dry-blended with the PAEK or PAEK-based powder, the thermally conductive filler may have a size distribution such that its median diameter D50 is from around the size of the d50 of the PAEK or PAEK-based powder to about 1/10 of the d50 of the PAEK or PAEK-based powder.

In certain embodiments, the composition may have a viscosity index, measured as a solution at 25°C in aqueous sulfuric acid solution at 96% by mass according to the standard ISO 307:2019, of from 0.65 dl/g to 1.15 dl/g, and preferentially from 0.85 dl/g to 1.13 dl/g. These viscosity indices are particularly advantageous and make it possible to obtain a good compromise to have both good coalescence properties during sintering (sufficiently low viscosity) and good mechanical properties of the sintered object (sufficiently high viscosity).

In certain embodiments, the composition may comprise a phosphate. The phosphate may notably be a phosphate salt, for instance a salt of H2PO₄⁻, HPO₄²⁻ , PO₄³⁻, or a mixture thereof, preferentially having a sodium ion, a potassium ion or a calcium ion as counter ion. Advantageously, the phosphate is incorporated by wet impregnation of an aqueous solution thereof into the powder / the composition in a proportion of greater than or equal to 500 ppm, or greater than or equal to 750 ppm, or greater than or equal to 1000 ppm, or greater than or equal to 1500 ppm, or greater than or equal to 2000 ppm, or greater than or equal to 2500 ppm.

In certain embodiments, the pulverulent composition comprises a flow agent, for example a hydrophilic or hydrophobic silica. Advantageously, the flow agent represents from 0.01% to 0.4% by weight relative to the total weight of the composition.

In other embodiments, the pulverulent composition does not comprise any flow agent.

In certain embodiments, the composition may undergo a heat treatment, notably an isothermal heat treatment. In that case, the heat treatment may be carried out at a temperature below the melting point of PAEK in the PAEK or PAEK-based powder and is particularly useful in the case where several crystalline forms of a PAEK (having different melting temperatures) coexist, which can affect the quality of the sintering. The duration of such a heat treatment may generally be less than or equal to 4 hours and preferably less than or equal to 2 hours.

According to the variant wherein the PAEK is a PEKK, in particular a PEKK having a T:I mole ratio of 60:40, the isothermal heat treatment may be carried out at a temperature of from 260°C to 290°C. The isothermal heat treatment prior to the sintering of the composition, may enable to obtain a composition with stable crystalline morphology, that is to say a composition which may not undergo fusion up to the construction temperature.

In certain embodiments, the composition may also be densified prior to sintering by methods known by the skilled person.

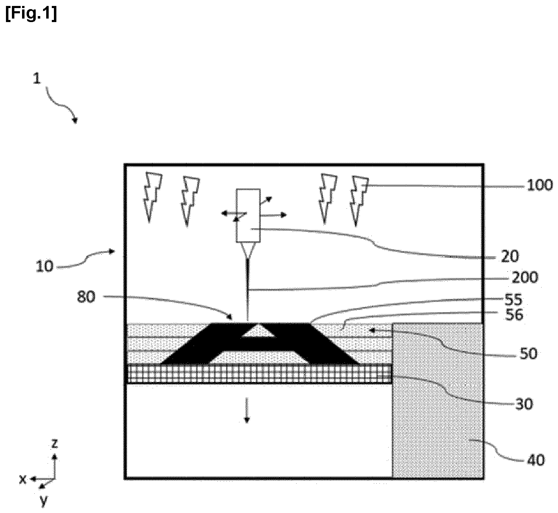

The pulverulent composition, as described above, may be used in a process for the electromagnetic radiation-mediated layer-by-layer sintering construction of a three-dimensional article in a device 1, such as the one shown diagrammatically in Figure 1.

The electromagnetic radiation may be, for example, infrared radiation, ultraviolet radiation or, preferably, laser radiation. In particular, in a device 1 such as the one shown diagrammatically in Figure 1, the electromagnetic radiation may comprise a combination of infrared radiation 100 and laser radiation 200.

The sintering process is a layer-by-layer manufacturing process for constructing a three-dimensional article 80.

The device 1 comprises a sintering chamber 10 in which are placed a feed tank 40 containing the pulverulent composition and a movable horizontal plate 30. The horizontal plate 30 may also act as a support for the three-dimensional object 80 under construction.

According to the process, pulverulent composition is taken from the feed tank 40 and deposited on the horizontal plate 30, forming a thin layer 50 of pulverulent composition constituting the three-dimensional object 80 under construction. The layer of pulverulent composition 50 is heated by means of an infrared radiation 100 to reach a substantially uniform temperature equal to a predetermined construction temperature Tc.

The energy required to sinter the particles of pulverulent composition at various points in the layer of pulverulent composition 50 is then provided by a laser radiation 200 of the mobile laser 20 in the plane (xy), according to a geometry corresponding to that of the object. The molten pulverulent composition resolidifies forming a sintered part 55, whereas the rest of the layer 50 remains in the form of unsintered pulverulent composition 56. A single pass of a single laser radiation 200 is generally sufficient to ensure the sintering of the pulverulent composition. Nevertheless, in certain embodiments, several passes at the same place and/or several electromagnetic radiations reaching the same place may also be envisaged to ensure the sintering of the pulverulent composition.

Next, the horizontal plate 30 is lowered along the axis (z) by a distance corresponding to the thickness of a layer of pulverulent composition, and a new layer is deposited. The laser 20 supplies the energy required to sinter the particles of pulverulent composition in a geometry corresponding to this new slice of the object, and so on and so forth : the procedure is repeated until the entire object 80 has been manufactured.

Once the article 80 has been completed, it is removed from the horizontal plate 30 and the unsintered pulverulent composition 56 may be screened before being returned, at least partly, into the feed tank 40 to serve as recycled composition.

The rapid tooling of an article, such as a mold part or a die, by electromagnetic radiation-generated sintering additive manufacturing, notably by laser sintering may present, at least in some embodiments, the following advantages: The three-dimensional nature of the powder bed enables multiple parts of the same or different geometry to be produced in a single production run by stacking the parts in three dimensions. Besides an improvement in process efficiency, the ability to make multiple parts in a single build cycle allows for many iterations of the same tool to be produced concurrently. These variations on the same part could be useful for final part fit adjustment or for mass customization. The three dimensional nature of the build volume allows for parts to be orientated in any possible direction, taking advantage of any anisotropic properties the final material may have. For example if thermal conductivity or stiffness are greater in one direction than another, the part can be oriented so that its useful properties can be maximized in the desired direction.

The radiation-generated sintering process has a further advantage in that complex parts do not take substantially longer to produce than equally sized simple parts. Geometry is also not constrained by the normal limitations on machining parts with complex internal cavities or other convoluted features that may be impossible to produce by conventional machining processes are possible with a layer-wise sintering process. In essence, the radiation-generated sintering process enables part complexity without an additional cost.

### Articles

Different types of articles may be manufactured by the use of the composition. Rapid tooling of the composition according to the invention enables to manufactures tools such as mold parts, for example mold parts for injection molding, or compression molding, or pressure forming, or vacuum forming, or stamp molding, or such as dies.

These mold parts may be good alternatives to the one directly obtained by metal laser sintering. They have good strength and stiffness properties at high temperature and have acceptable thermal conductivities. Even though, their thermal conductivity remains well below the one of metal laser sintered parts, the flexibility in geometry offered by techniques such as laser sintering, enables to integrate conformal cooling channels into the mold structure, compensating to some extent the gap in terms of intrinsic thermal conductivity. In addition, the equipment for 3D printing polymers such as PAEK is much less expensive and much easier to operate than the one for metal laser sintering.

Finally, although the PAEK composite mold part has the mechanical robustness to withstand subsequent plastic processing technique, its surface may easily be modified or smoothed using hand tools or manual methods. That, is, the surface of a sintered PAEK part can easily be sanded or polished to the desired surface roughness of the finished tool with substantially less effort than a metal sintered part.

### EXAMPLES

The material which is used in the examples is:
- A PEKK powder for laser sintering: Kepstan^{®} 6002 PL, manufactured by Arkema. The powder is a PEKK powder with a T:I ratio of 60:40 and a median particle size of 50 microns. It is heat treated as described in the description.
- Carbon fibers: Tenax^{®}-A HT M100, manufactured by Teijin. The carbon fibers have a median length of 100 microns.
- Boron nitride platelets: 3M^{™} platelets CFP 0075, manufactured by 3M. The platelets have a median particle size of 6 to 9.5 microns.
- Copper powder (spheroidal), having a median particle size of 10 to 25 microns, manufactured by Sigma-Aldrich.

### Example 1

A dry blend of, by weight of composition, 70% PEKK, 20% carbon fibers and 10% boron nitride platelets is prepared with a tumble mixer.

Sample specimens are printed using an EOS P 800 laser sintering machine, manufactured by Electro Optical Systems.

The thermal conductivity of the final parts as measured by Guarded Heat Flow Meter Technique as described in ASTM E1530-19 at 25°C is between 0.75 W/m-K to 1.25 W/m-K in the direction orthogonal to the coater blade movement and between 1.5 W/m-K to 2 W/m-K in the direction parallel to the powder recoated movement.

Differential scanning calorimetry confirms that the final parts are semicrystalline and would therefore have properties sufficient at the temperature required for rapid-tooling injection molding of many engineering thermoplastics. The improved thermal conductivity would improve overall cycle times during the injection molding process.

### Example 2

A dry blend of, by weight of composition, 60% PEKK and 40% copper powder is prepared with a tumble mixer.

Samples specimens are printed as in example 1.

The thermal conductivity of the final parts as measured by Guarded Heat Flow Meter Technique as described in ASTM E1530-19 at 25°C is between 1.0 W/m-K to 1.5 W/m-K in the direction parallel or orthogonal to the powder recoated movement.

Differential scanning calorimetry confirms that the final parts are semicrystalline.

## Claims

1. Composite article, such as a mold part or an extrusion die, made of a composition comprising at least one polyarylether ketone and at least one thermally conductive filler,
wherein the composite article has a thermal conductivity measured according to the Guarded Heat Flow Meter Technique as described in ASTM E1530-19 at 25°C of at least 0.5 W/mK, preferably of at least 0.75 W/mK, more preferably of at least 1 W/mK, even more preferably of at least 2.5 W/mK, very preferably of at least 5 W/mK.

2. The composite article of claim 1, wherein the thermally conductive filler is chosen among the list consisting of:
- ceramics, such as boron nitride or aluminum oxide,
- metals, such as copper, stainless steel, aluminum, gold, silver,
- carbon-based additives, such as carbon black, carbon nanotubes, graphite
- mineral additives, such as hematite,
- their mixture.

3. The composite article of any one of claims 1 and 2, wherein the at least one thermally conductive filler has a particle size distribution as measured by laser diffraction according to ISO 13320:2009, having a median diameter D50 of 0,4 µm to 80 µm, preferably of 0,5 µm to 50 µm.

4. The composite article according to any one of claims 1 to 3, wherein the composition consists of: said polyaryletherketone(s), said thermally conductive filler(s), optionally one or more additional thermoplastics, different from said polyaryletherketone(s), optionally one or more additional fillers, different from said thermally conductive filler(s), and optionally one or more additives.

5. The composite article according to any one of claims 1 to 4, wherein the composition comprises reinforcing fibers, and preferably carbon fibers.

6. The composite article according to claim 5, wherein the reinforcing fibers are sensibly unidirectionnally oriented.

7. The composite article according to any one of claims 1 to 6, wherein the composition comprises boron nitride and carbon fibers.

8. The composite article according to any one of claims 1 to 7, wherein the polyaryl-ether-ketone is a poly-ether-ketone-ketone.

9. The composite article according to claim 8, wherein the poly-ether-ketone-ketone is a copolymer which consists essentially of, preferably consists of, two repaeating units having the formula: 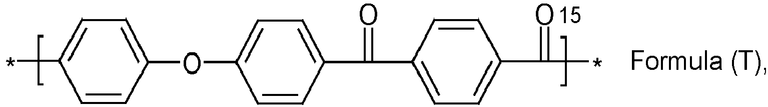 and 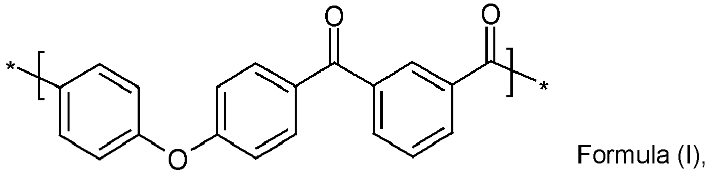 wherein the copolymer has a T:I ratio from 55:45 to 85:15;
preferably, wherein the copolymer has a T:I ratio from 58:42 to 72:28;
and even more preferably, wherein the copolymer has a T:I ratio of 60:40.

10. The composite article according to any one of claims 1 to 9, wherein the mass ratio of thermally conductive filler(s) to polyaryletherketone(s) is from 1:20 to 4:1 more preferably 1:5 to 2:1 most preferably form 1:3 to 1:1.

11. The composite article of any one of claims 1 to 10, obtained by an additive manufacturing process, preferably by material extrusion additive manufacturing or by electromagnetic radiation-generated sintering additive manufacturing, and more preferably by laser sintering, of said composition.

12. The composite article according to any one of claims 1 to 11, having a compressive modulus of at least 3.8 GPa according to ASTM D695 - 15.

13. The composite article according to any one of claims 1 to 12, wherein composite article is a mold part for injection molding, or compression molding, or pressure forming, or vacuum forming, or stamp molding, or a die.

14. Composition according to any one of claims 1 to 10.

15. Use of a composition according to claim 14 in a rapid tooling method, wherein the rapid tooling method preferably includes material extrusion additive manufacturing or electromagnetic radiation-generated sintering additive manufacturing, and more preferably laser sintering.
